# EUROPEAN PATENT APPLICATION

(11) **EP 1 894 693 A1**
(43) Date of publication of application: **05.03.2008**
(21) Application number: 07115009.8
(22) Date of filing: 27.08.2007
(51) Int. Cl.: B29B 7/00, F16G 5/04, B29B 7/18, B29C 47/10, C08K 3/00, C08K 7/02, B29B 7/90, C08J 3/20

(54) **Method of mixing fiber loaded compounds using a y-mix cycle**

(30) Priority: 28.08.2006 US 510905
(71) Applicant: THE GOODYEAR TIRE & RUBBER COMPANY, Akron, OH 44316-0001 (US)
(72) Inventor: Burrowes, Thomas George, North Canton, OH 44720 (US); Hedberg, Carol Sue, Lincoln, NE 58621 (US)
(74) Representative: Hellwig, Tillmann Johannes

(57) **Abstract**

A Y-mix cycle has been discovered to achieve proper quality and consistency when mixing heavy fiber loaded compounds within a polymer compound. The Y-mix cycle may include the following steps: mixing a first portion of a polymer with a first component mix that includes at least one filler to create a first blend; mixing a second portion of the polymer (or a portion of a different polymer) with a second component mix that includes at least one fiber to create a second blend; and mixing the first blend with the second blend to create the polymer compound.

## Description

### Background of the Invention

### Field of Invention

This invention pertains to the mixing of polymer compounds and more particularly to the mixing of fiber loaded compounds using a Y-mix cycle.

### Description of the Related Art

In general, rubber compounding refers to the process of adding various materials to the rubber polymer to achieve desirable physical and chemical properties. During compounding of a typical rubber composition, it is known to mix together various ingredients including vulcanizing agents, accelerators, fillers, fibers, plasticizers and antidegradants. The ingredients may be mixed in one stage but are typically mixed in at least two stages, namely at least one non-productive stage followed by a productive mix stage. The final curatives including the vulcanizing agents are typically mixed in the final stage which is conventionally called the "productive" mix stage in which the mixing typically occurs at a temperature, or ultimate temperature, lower than the mix temperature(s) of the preceding non-productive mix stage(s).

Good dispersion of these ingredients, is necessary for consistent compound performance. Dispersion of fibers involves the process of uniformly incorporating the fibers throughout the rubber elastomer. If good dispersion of the fibers is not achieved, the compound may fail prematurely or behave inconsistently when made into a product. More complete fiber dispersion, however, results in a rubber compound having more consistent physical and chemical properties throughout the bulk of the compound. This yields a better finished product, such as a power transmission belt.

Conventionally, fiber loaded rubbers are mixed either by combining all the ingredients, including the fibers, into a single stage non-productive mix or by using two or more stages non-productive mix cycle. While these known methods generally work well for their intended purpose, they do not provide sufficient fiber dispersion when the fiber load is relatively high in the compound.

### Summary of the Invention

This invention is directed towards a method of mixing heavy fiber loaded compounds to achieve proper quality and consistency within the compound according to claim 1.

According to another aspect of this invention, a power transmission belt is disclosed which is manufactured using the method of claim 1.

One advantage of this invention is that heavy fiber loads can be properly dispersed throughout the rubber compound mixture.

Another advantage of this invention is that fiber loaded compounds can be properly mixed using existing process equipment.

### Brief Description of the Drawings

The invention may take physical form in certain parts and arrangement of parts, a preferred embodiment of which will be described in detail in this specification and illustrated in the accompanying drawings which form a part hereof and wherein:
FIGURE 1 is a fragmentary perspective view illustrating one embodiment, an endless power transmission belt, having at least one component manufactured in accordance with this invention.
FIGURE 2 is a diagram of the mixing chamber of an internal Banbury^{™} mixer illustrating the primary components that affect the mixing process.
FIGURE 3 is a perspective view of a mill showing the rollers used in the mixing process.
FIGURE 4 is a cut-a-way side view of an extruder illustrating the primary components that affect the mixing process.
FIGURE 5 shows schematics for the production trial #1 mix variations.
FIGURE 6 shows photographs of cured sheets of the production trial #1 mix variations.
FIGURE 7 shows photographs of cured sheets from production trial #1 for the control and the Y-mix.
FIGURE 8 shows photographs of sectional views of cured belts of two of the production trial #1 mix variations.
FIGURE 9 shows schematics for the production trial #2 mix variations.
FIGURE 10 shows photographs of cured sheets of the production trial #2 mix variations.
FIGURE 11 shows photographs of sectional views of cured belts of two of the production trial #2 mix variations.

### Description of the Invention

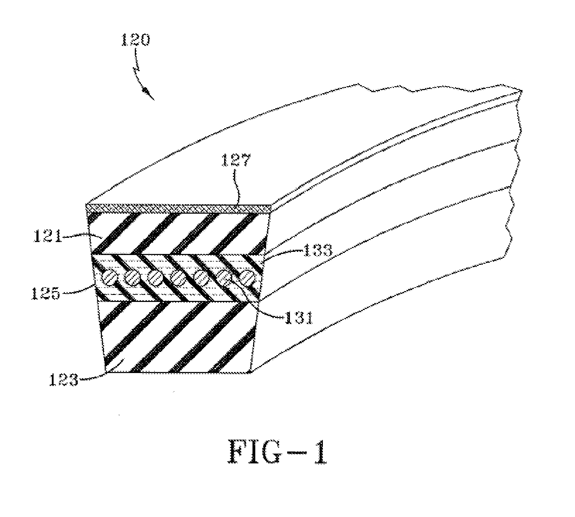

FIGURE 1 illustrates a first embodiment, an endless power transmission belt structure or belt 120, having at least one component manufactured in accordance with this invention. The belt 120 is particularly adapted to be used in associated sheaves in accordance with techniques known in the art. The belt is particularly suited for use in short center drives, exercise equipment, automotive drives, all-terrain vehicle drives, snowmobile drives, farm equipment, so-called torque sensing drives, applications where shock loads of varying belt tension are imposed on the belt, applications where the belt is operated at variable speeds, applications where the belt is spring-loaded to control its tension, and the like.

With continuing reference to FIGURE 1, the belt 120 comprises a tension section 121, a cushion section 123 and a load-carrying section 125 disposed between the tension section 121 and cushion section 123. The belt 120 may optionally have an inside ply or inner fabric layer (not shown), adhered to a drive surface. The belt 120 may also have a fabric backing 127. The fabrics to be used on the backing layer 127 may be made of conventional materials. The load-carrying section 125 has load-carrying means in the form of load-carrying cords 131 or filaments which are suitably embedded in an elastomeric cushion or matrix 133 in accordance with techniques which are well known in the art. The cords 131 or filaments may be made of any suitable material known and used in the art. Representative examples of such materials include aramids, fiberglass, nylon, polyester, cotton, steel, carbon fiber and polybenzoxazole. The elastomeric compositions for use in the tension section 121, cushion section 123 and/or a load carrying section 125 may also be made of any suitable material known and used in the art. Various acceptable options for the materials used in making the backing layer 127, the materials in making the cords 131, and the elastomeric compositions used in making the tension, cushion and load carrying sections 121, 123, 125 are provided in US-B- 6, 695,734 and US-B-6,918,849. Any of the belt 120 components (or multiple such components) that include an elastomeric composition may include a polymer compound made according to this invention. This will be discussed further below.

Still referring to FIGURE 1, the remaining portion of this patent application will describe the use of an inventive method of forming any polymer compound. This invention is especially useful when the compound contains a relatively high fiber loading. By providing the opportunity to use heavy loaded fibers with the various belt components, the compounder has more opportunity to create a component with more useful properties thereby increasing business potential for these components. It should be understood that while belt 120 may be an ideal use for this invention, this invention has wide application to disperse fillers, especially when the filler load is heavy. As a result, this invention can be used with other rubber products including, but not limited to, tires and industrial hoses.

As explained above, conventional methods of mixing fiber loaded rubbers have proven ineffective in cases where compounds with high fiber loadings are needed. The inventors, however, have discovered that by using a "Y-mix" non-productive cycle in place of the single stage and two stage mixing cycles known in the art, large amounts of fibers can be mixed into the compound with surprisingly improved fiber dispersion characteristics. The Y-mix cycle includes the following three non-productive mixes: creating a first blend by mixing a first portion of a polymer with a first component mix that includes the required fillers; creating a second blend by mixing a second portion of the same polymer (or a portion of different polymer) with a second component mix that includes the required fibers; and, creating the polymer compound by mixing the first blend with the second blend.

The particular polymer and fillers used with this invention can vary according to the required characteristics of the polymer compound. Similarly, this invention will work with any known fiber material including fibers formed of cotton, carbon, wood cellulose and related fibers, as well as fibers made of a suitable synthetic material including aramid, acrylic, nylon, rayon, polyester, carbon, polytetrafluoroethylene (PTFE), polybenzoxazole (PBO), fiberglass and the like. Each fiber may have a diameter ranging between 0.01 mm to 1.3 mm (0.0004 inch to 0.050 inch) and length ranging between 0.025 mm to 12.5 mm (0.001 inch to 0.5 inch). Preferably, the length of the fiber exceeds the diameter. The fibers may be used in an amount ranging from 1 to 100 parts per hundred crosslinkable elastomer, usually referred to as "parts per hundred rubber" or "phr". Preferably, the fibers are used in an amount ranging from 20 phr to 70 phr, alternately 40 phr to 60 phr, and have a total fiber content of between 1% to 50% by weight, alternately 10% to 30%. The fiber materials, dimensions, and quantities are exemplary only and those provided in previously mentioned US-B-6, 695,734 are also contemplated. The orientation of the fibers in the rubber compound is achieved by means known to those skilled in the art in order to achieve the desired compound properties.

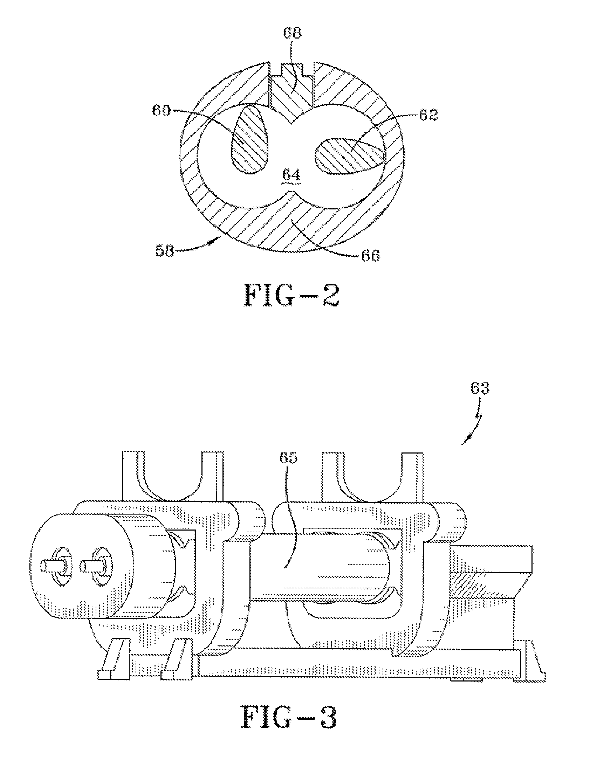

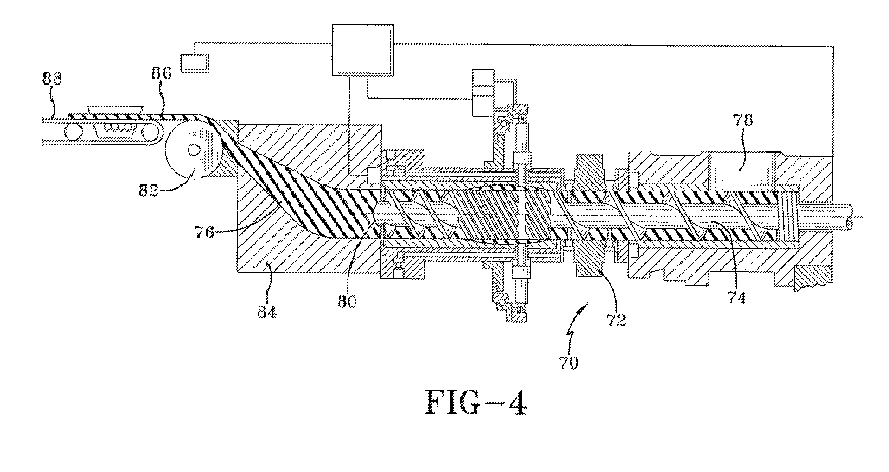

It is well known to employ a mixer and mixing process in the formulation of compounds necessary to the manufacture of polymeric based goods, including power transmission belts and tires. The mixer may be either continuous or discontinuous. A discontinuous, or "batch" process, mixes the material either relatively openly or within an enclosed chamber by operation of one or more mixing rotors. A well known device that provides an enclosed chamber for batch mixing is known as a Banbury^{™} mixer. Such a mixer 58, as illustrated in FIGURE 2 may include a pair of rotors 60, 62 housed within a cavity 64. Walls 66 enclose the cavity 64 and a compression plunger 68 pressures batch material housed within the cavity 64. A well known device that provides relatively open batch mixing is known as a mill 63, illustrated in FIGURE 3. While a two-roll mill having a pair of rollers 65 is shown, it is to be understood that any particular mill design chosen with sound engineering judgment will work with this invention. In a continuous process, material is passed through a cylindrical chamber by operation of a screw mechanism. A well known device that provides such a screw mechanism is known as an extruder. FIGURE 4 shows a side view of an extruder 70 having an outer housing 72 and a screw 74. Material such as rubber 76 is fed into the extruder 70 through a feed opening 78 at the rear of the extruder 10. The rubber 76 is then masticated and processed by the screw 74 as the screw passes the rubber through the extruder 70. The rubber 76 is then ejected from the extruder 10 at an outlet opening 80. In the embodiment shown, the rubber 76 is applied to a roller 82 through a roller die 84 to form a product 86 which is carried away on a conveyor belt 88. The operation of a Banbury^{™} mixer, a mill, and extruders is well known in the art and thus will not be described further.

The following two production trials are presented for the purposes of illustrating and not limiting this invention. Note that the fiber orientation was assessed by the ratio of the physical properties in the "with" direction (machine direction) to the physical properties in the "against" direction (perpendicular to the machine direction).

### PRODUCTION TRIAL #1

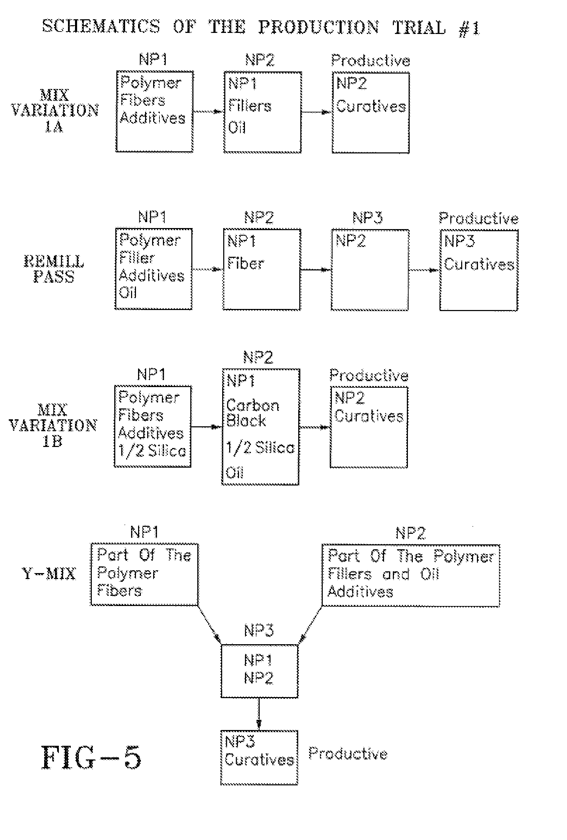

For this trial, a SBR elastomer was mixed with a fiber blend containing 4 mm polyester fiber and 1 mm Conex with a total fiber content of 17.7%. Four different mix cycles were proven to be feasible in the lab, and they were then mixed in production. The mix cycles are shown in FIGURE 5. Note that NP means non-productive mix. Thus, NP1 refers to the first non-productive mix. Similarly, NP2 refers to the second non-productive mix and NP3 refers to a third non-productive mix. Stocks mixed with the four mix cycles went through the production mix, calendering and standard preparation and build processes. The calendered stocks were evaluated in the lab for various physical properties. Belt properties and physical properties were also determined for the conventionally mixed production compound control and for another conventionally mixed production control compound containing 100% rework (workaway) of same compound ("Control with 100% WA").

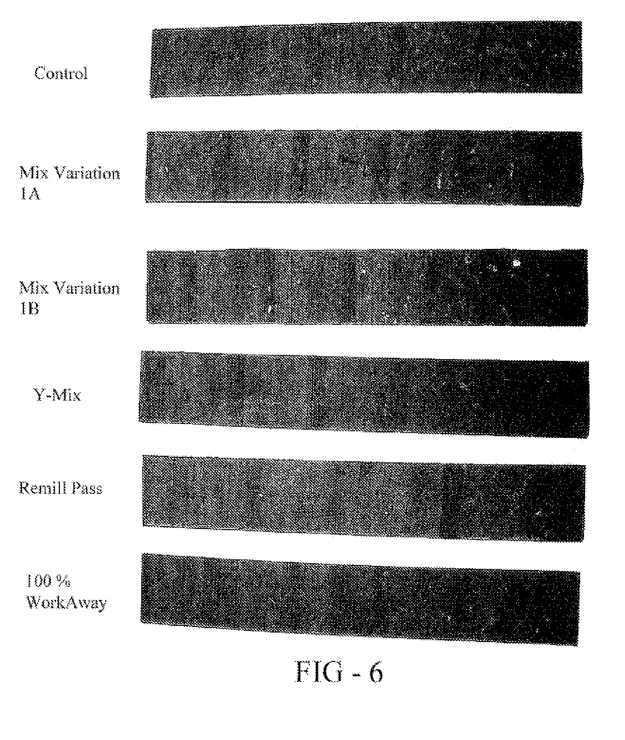

The test results for the polymer compounds made with the various mix cycles as well as the control and control with 100% WA are shown in Charts 1 through 7. A visual indication of the fiber dispersion is shown in FIGURES 6-8

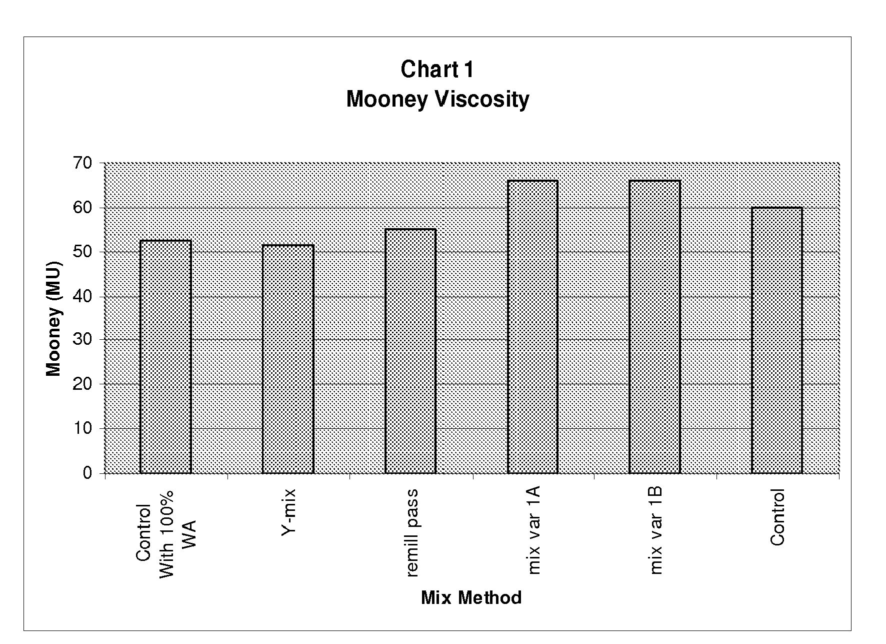

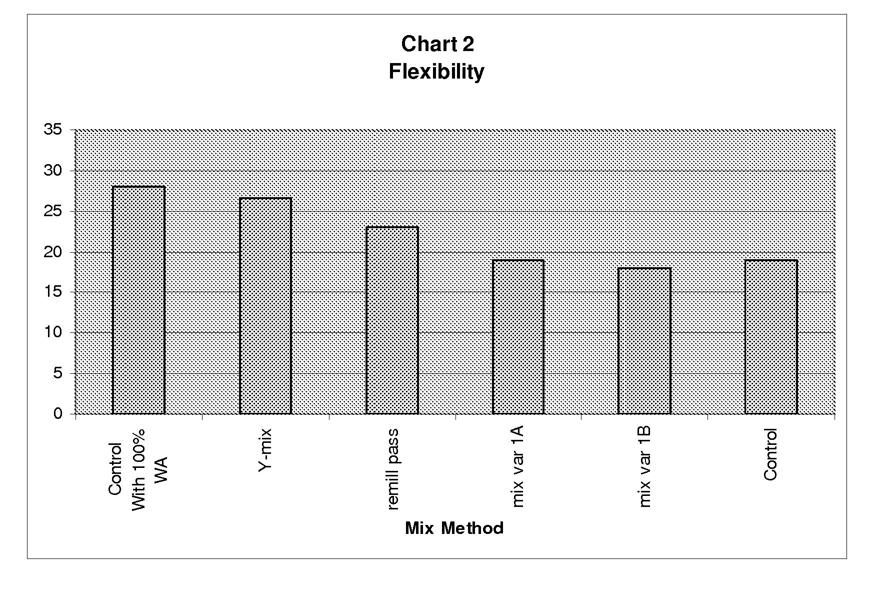

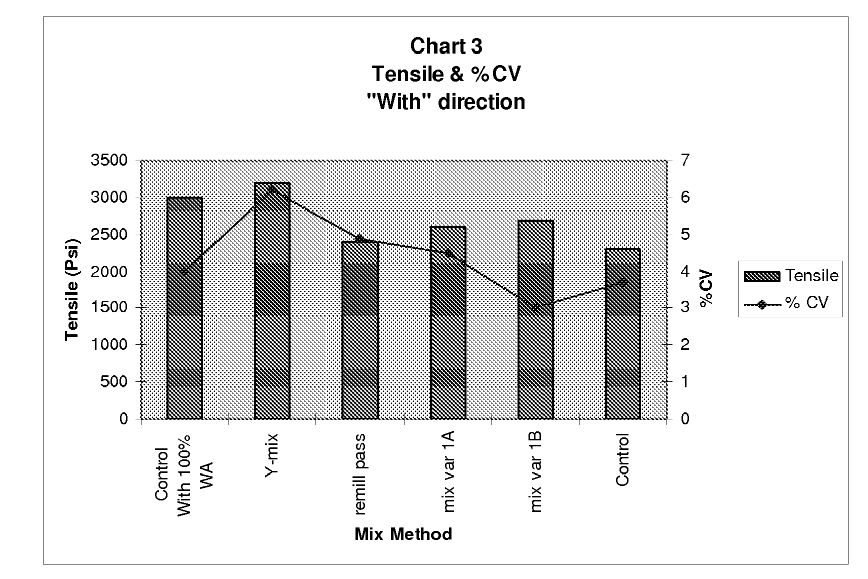

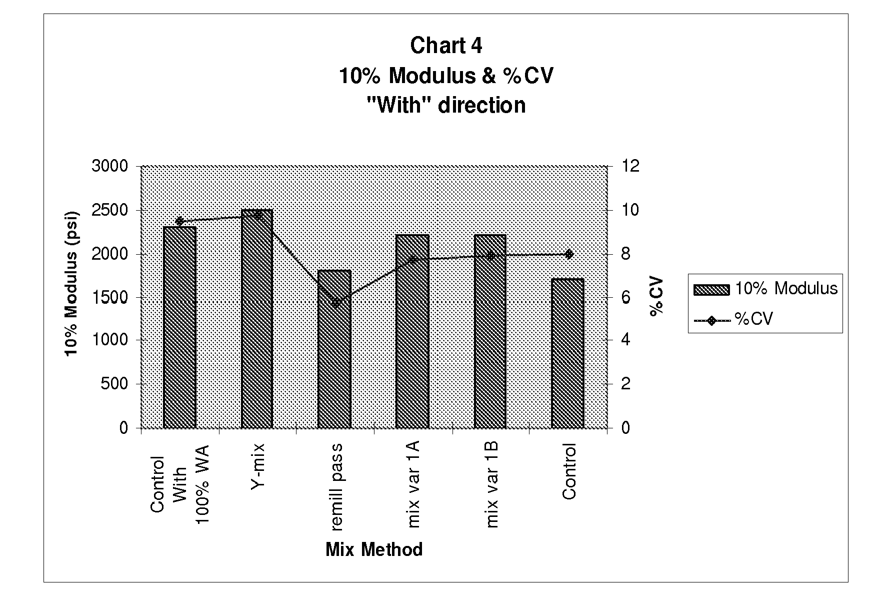

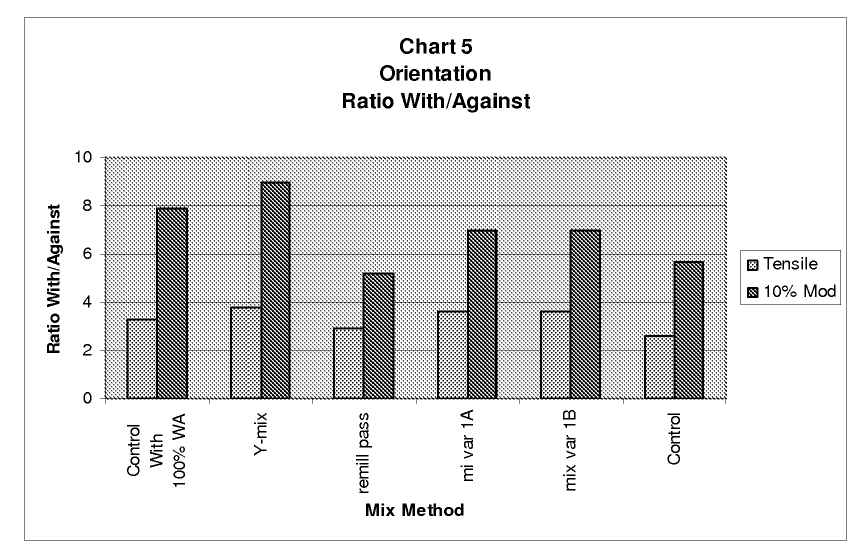

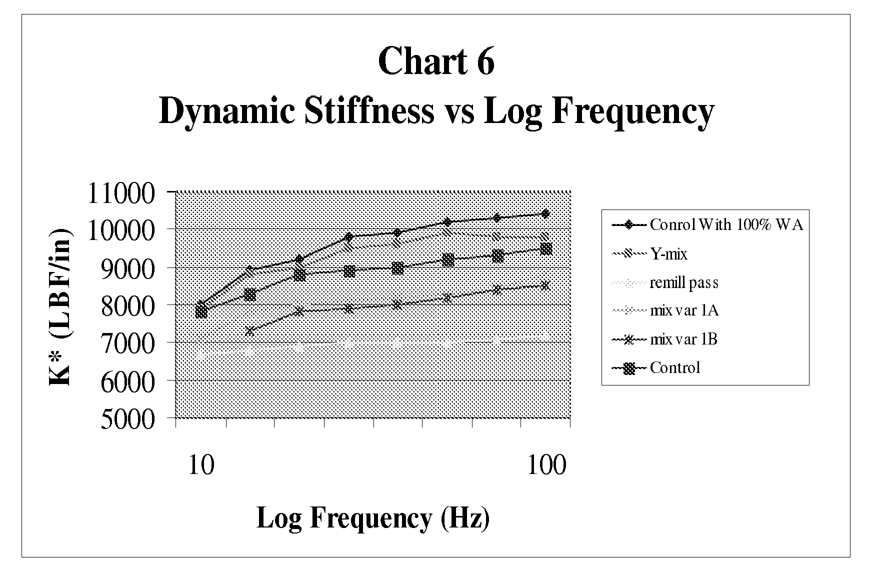

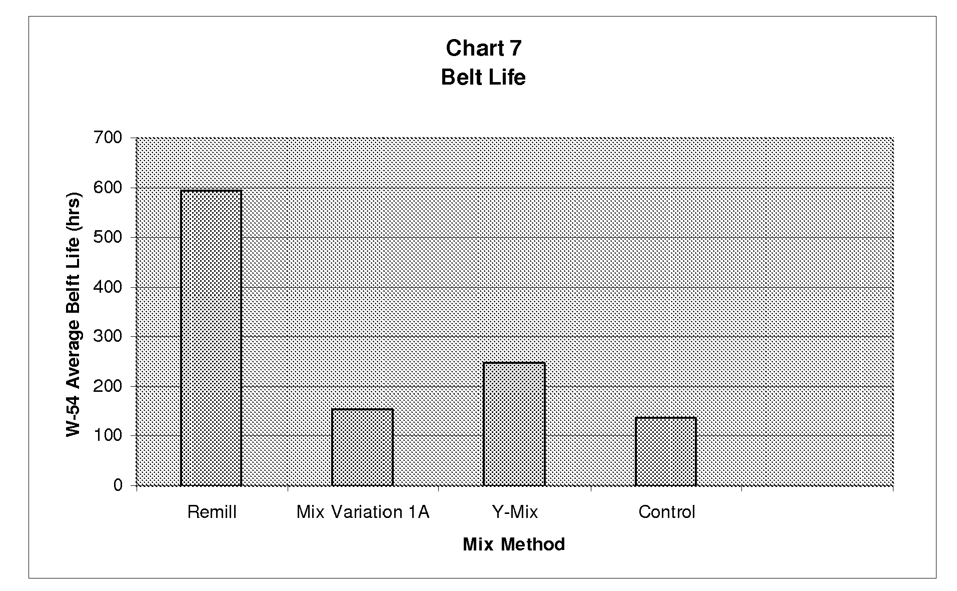

As shown in Chart 1, the following mixes show a decrease in Mooney Viscosity (at 100ºC) from the control; Y-mix, Remill Pass and Control With 100% Work Away.

As shown in Chart 2, flexibility of the vulcanizates, determined by an in-house procedure, was increased from the Control for all the different mixes except Mix Variation 1 B. Note that the Y-mix had the second best flexibility.

As shown in Chart 3, the tensile strength "with" direction was increased from the Control for all of the different mix cycles. The highest tensile strength was the Y-mix.

As indicated in Chart 4, the 10% Modulus "with" direction was increased from the Control for all of the different mix cycles. The highest 10% Modulus was the Y-mix.

As indicated in Chart 3, the tensile % Coefficient of Variance (CV) "with" direction was improved from the Control for only mix Variation 1 B. (As known by those of skill in the art, % CV = standard deviation / mean * 100). Chart 4 shows that the % CV "with" direction for 10% Modulus was improved from the Control for the Remill Pass, Mix Variation 1 A and Mix Variation 1 B.

As shown in Chart 5, the orientation determined by the ratio of the "with" direction to "against" direction using tensile strength indicates that all the mixes are better oriented than the control. Using the 10% modulus, it is apparent that all mixes except the remill were better oriented than the control. The best orientation for tensile and 10% modulus was the Y-mix cycle. Chart 6, shows the dynamic stiffness data.

As shown in Chart 7, the average belt life data shows the belt made from Y-mixed compound had significantly more belt life that the one from control compound. The Remill Pass provided very good belt life. The inventors believe that this result can be explained by the additional mastication of natural rubber achieved with the extra mixing during the Remill Pass.

FIGURE 6 provides a visual comparison of the fiber dispersion among the production trial #1 mix variations in cured sheets. The fibers are indicated by the white markings. As shown, the Y-mix provides improved fiber distribution and dispersion over all the other variations.

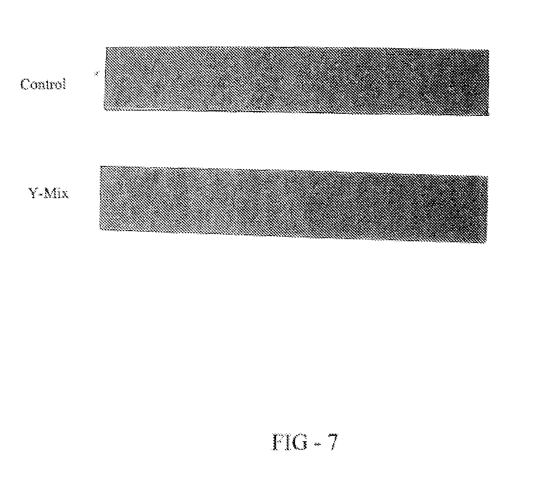

FIGURE 7 provides a visual comparison of the fiber dispersion between the production trial #1 control and Y-mix variations in cured sheets. Again, the fibers are indicated by the white markings. As shown, the Y-mix provides improved fiber distribution and dispersion over the control.

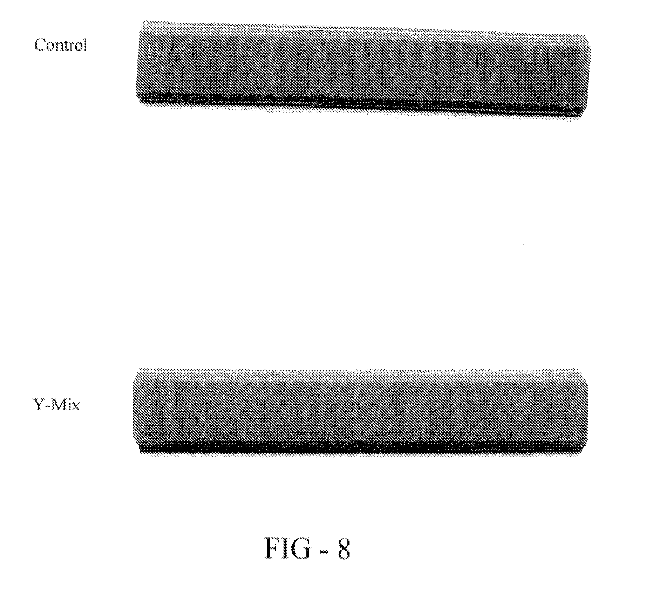

FIGURE 8 provides a visual comparison of the fiber dispersion between the production trial #1 control and Y-mix variations in longitudinally slit sections of cured belts. Once again, the fibers are indicated by the white markings and the Y-mix provides improved fiber distribution and dispersion over the control.

In conclusion, the fiber distribution and dispersion was improved from the Control using the Y-mix procedure. Overall, the Y-mix cycle showed the most overall improvements from this production trial. The average energy per batch used for the Y-mix is approximately the same for the Control. The highest average peak energy usage, however, for the Y-mix was 852 kilowatts (kw) versus 783 kw for the Control.

### PRODUCTION TRIAL #2

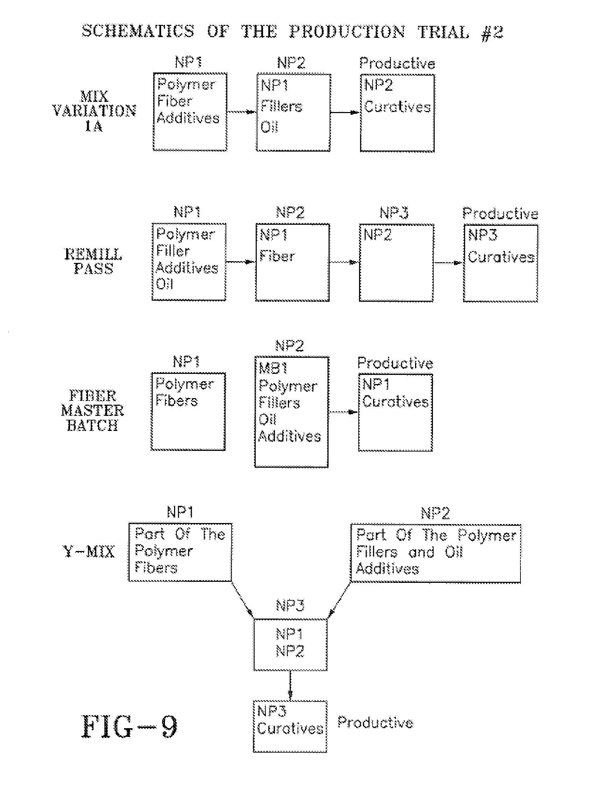

For this trial, a neoprene rubber polymer was mixed with a fiber blend containing cotton flock and 3/8 inch chopped polyester tire cord with a total fiber content of 17.0%. Four different mix cycles were proven to be feasible in the lab, and were then mixed in production. The mix cycles are shown in FIGURE 9. Note that MB designation means master batch mix. Thus, MB1 refers to the first master batch mix. Compounds mixed with the four mix cycles went through the production mix, calendering and standard preparation and build process. The calendered stocks were evaluated in the lab for various physical properties. Belt properties and physical properties were also determined for the conventionally mixed production compound control.

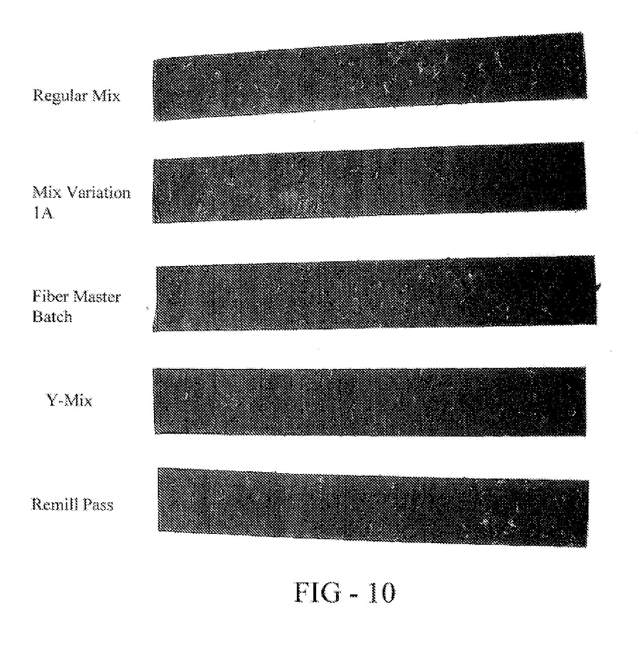

The test results for the compounds made with the various mix cycles as well as the control are shown in Charts 8 through 14. A visual indication of the fiber dispersion is shown in FIGURES 10-11.

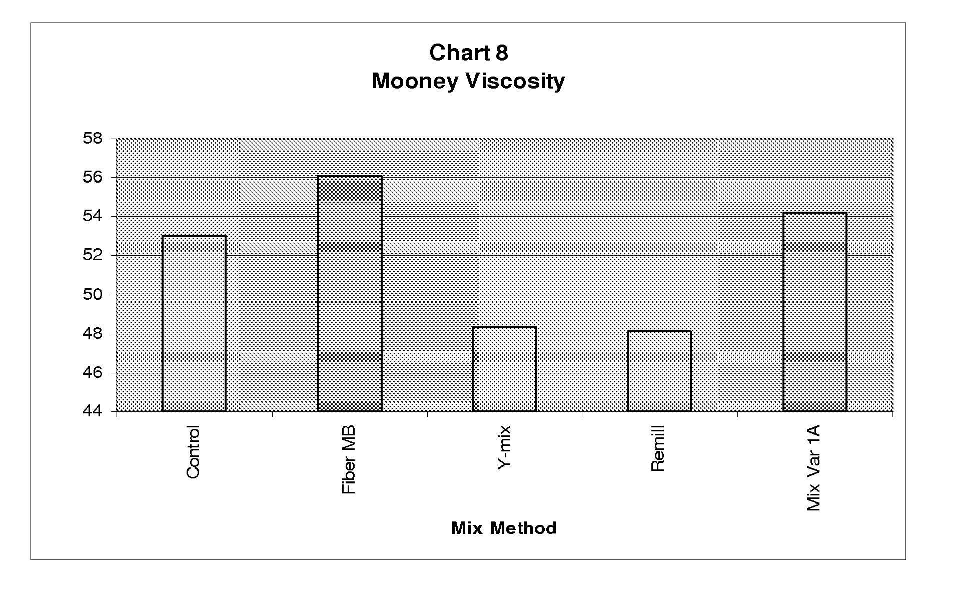

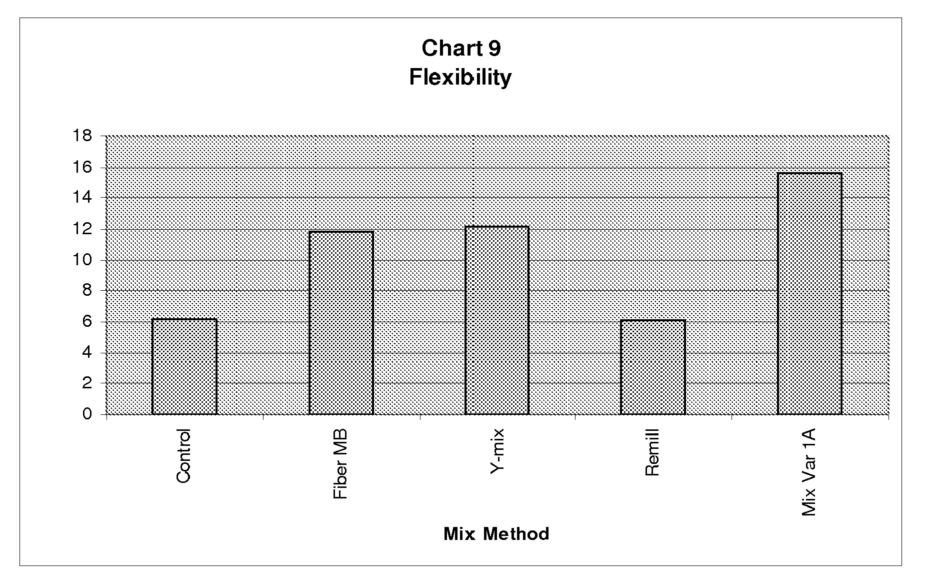

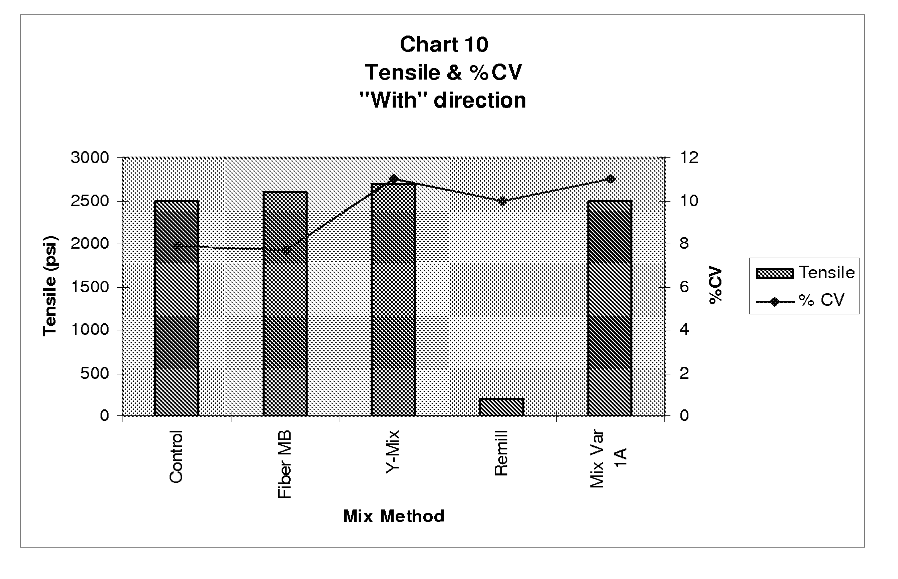

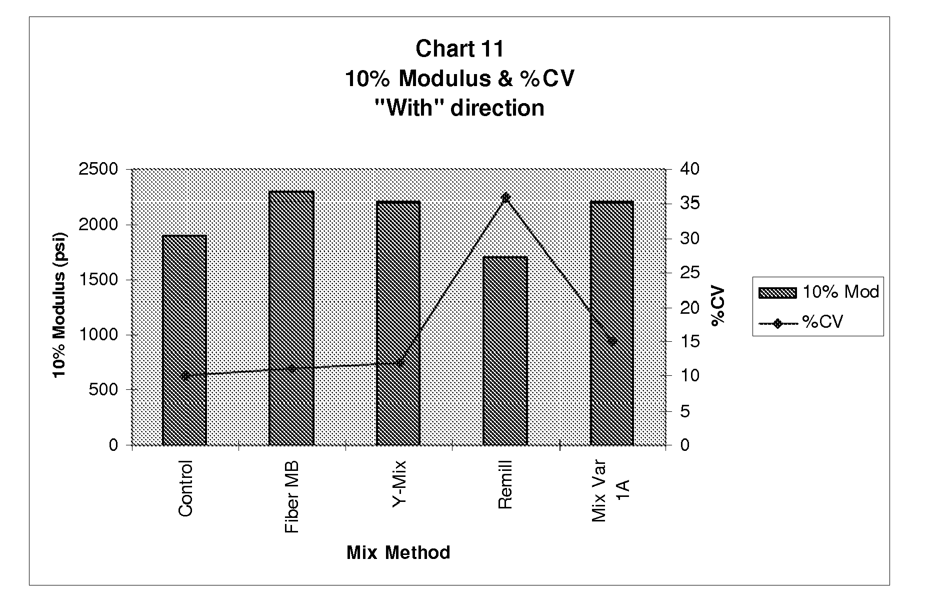

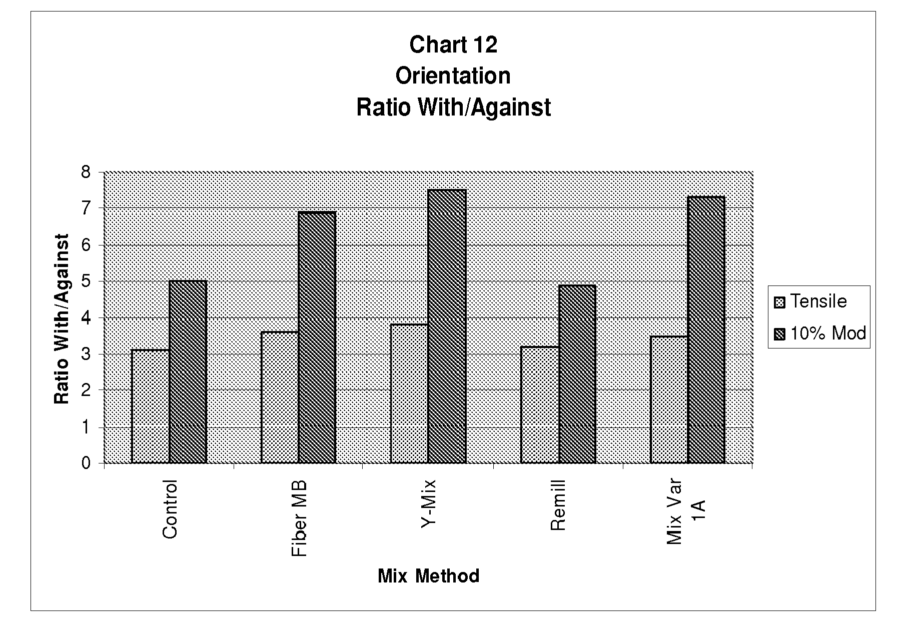

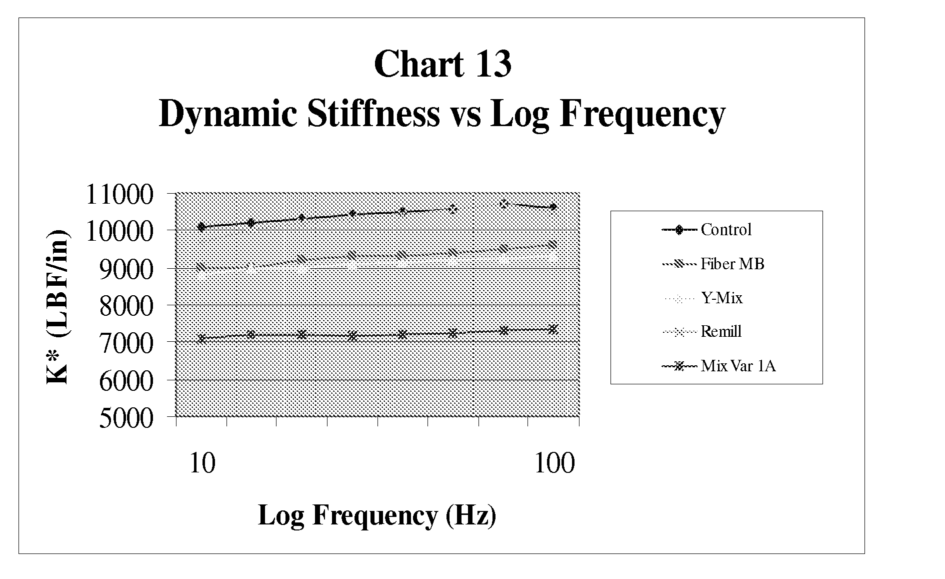

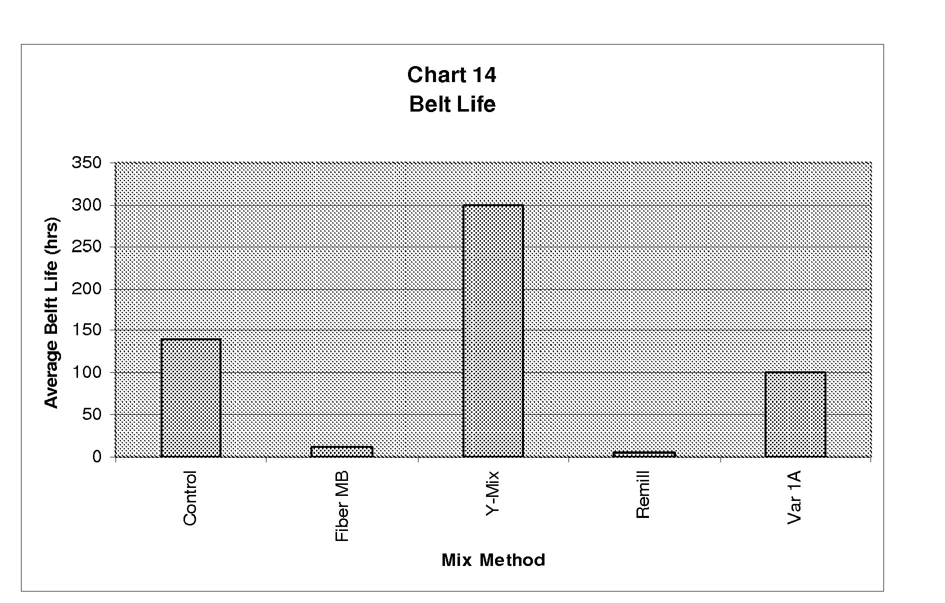

As shown in Chart 8, the following mixes showed a decrease in Mooney viscosity (at 100º C) from the control; Y-mix, remill pass. As shown in Chart 9, flexibility was increased from the control for all the different mixes except the remill pass. The best flexibility was mix variation 1 A followed by the Y. As shown in Chart 10, tensile strength "with" direction was increased from the control for three of the four different mix cycles. The highest tensile strength was the Y-mix.

The 10% modulus "with" direction was increased from the control for three of the four different mix cycles. The highest 10% modulus was the fiber master batch followed by the mix variation 1 A and the Y-mix. As indicated in Chart 10, the tensile % CV "with" direction was improved from the control for only the fiber master batch. Chart 11, also indicates that the 10% modulus % CV "with" direction was similar to the control for fiber master batch and Y-mix, but worse than the control for the other mix cycles.

As shown in Chart 12, the orientation determined by the ratio of the "with" direction to "against" direction using tensile strength had all the mixes better oriented than the control. Using the 10% modulus, all mixes were better oriented than the control except for the remill pass. The best orientation for tensile and 10% modulus was the Y-mix cycle. Chart 13, shows the dynamic stiffness / Frequency data. Y-mix and fiber master batch had similar dynamic stifffness profiles, less than control and remill pass but well above mix variation 1 A.

As shown in Chart 14, the average belt life data shows the Y-mix with more than twice the life of the control.

FIGURE 10 provides a visual comparison of the fiber dispersion among the production trial #2 mix variations in cured sheets. The fibers are indicated by the white markings. As shown, the Y-mix provides improved fiber distribution and dispersion over all the other variations.

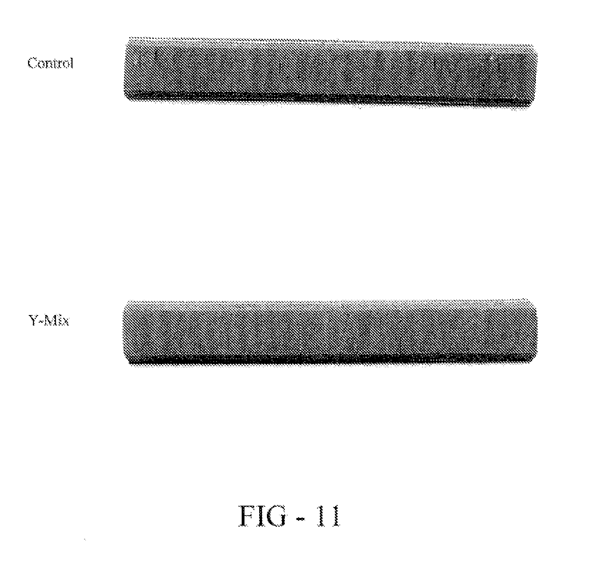

FIGURE 11 provides a visual comparison of the fiber dispersion between the production trial #2 control and Y-mix variations in longitudinally slit sections of cured belts. Again, the fibers are indicated by the white markings and the Y-mix provides improved fiber distribution and dispersion over the control.

In conclusion, once again the Y-mix cycle showed the most significant overall improvement. The average energy used per batch was slightly higher for the Y-mix (32.6 kWh\batch) than the control (28.5 kWh\batch). The highest average peak power usage for control was 489 kW and for the Y-mix 405 kW. The peak power usage is slightly lower for the Y-mix.

## Claims

1. A method of making a polymer compound, the method comprising the steps of:
mixing a first portion of a polymer with a first component mix that includes at least one filler to create a first blend;
mixing a second portion of the polymer or a portion of a different polymer with a second component mix that includes at least one fiber to create a second blend; and,
mixing the first blend with the second blend to create the polymer compound.

2. The method of claim 1 wherein at least one of the three mixing steps occurs in a Banbury^{™} mixer.

3. The method of claim 2 wherein each of the three mixing steps occur in the same Banbury^{™} mixer.

4. The method of claim 1 or 2 wherein at least one of the three mixing steps occurs in an extruder.

5. The method of claim 1, 2 or 4 wherein at least one of the three mixing steps occurs in a mill.

6. The method of at least one of the claims 1-5 further comprising the step of using the polymer compound to form at least one transmission belt component.

7. A transmission belt having a component made by the process comprising the steps of:
mixing a first portion of a polymer with a first component mix that includes at least one filler to create a first blend;
mixing a second portion of the polymer or a portion of a different polymer with a second component mix that includes at least one fiber to create a second blend;
mixing the first blend with the second blend to create a polymer compound; and
forming the component from the polymer compound.
